# EUROPEAN PATENT APPLICATION

(11) **EP 2 075 728 A1**
(43) Date of publication of application: **01.07.2009**
(21) Application number: 07301751.9
(22) Date of filing: 27.12.2007
(51) Int. Cl.: G06F 21/00

(54) **A method and an apparatus for code protection**

(71) Applicant: Thomson Licensing, 92100 Boulogne-Billancourt (FR)
(72) Inventor: Monsifrot, Antoine, 35510, CESSON-SEVIGNE (FR); Salmon-Legagneur, Charles, 35000, RENNES (FR)
(74) Representative: Ruellan-Lemonnier, Brigitte

(57) **Abstract**

A method for code protection. At the beginning of the execution of a software program, a big memory area (130) is allocated (10) and filled (11) with dummy code. When a ciphered function is to be executed, an at least pseudo-random address in the memory area (130) is obtained (13), e.g. as an offset from the start of the memory area, and the function is deciphered (14) and executed (15) at this address. As such, it is more difficult to use hardware breakpoints to analyse the program. Also provided is an apparatus.

## Description

### FIELD OF THE INVENTION

The present invention relates generally to software processing, and in particular to protection of software.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

For various reasons, software developers often wish to protect the confidentiality of their software code. Such reasons may include a desire to protect: secret knowledge or know-how in the code; a complex design from potential copiers; and further code protection features from hackers, so called secure coding.

The prior art for protecting the confidentiality of software code may generally be divided into three different families of techniques.

A first such technique is to use crypto-processors. As such processors are tamper resistant and also ensure that no one may access the interior of the processor, the only thing a hacker may access is the output from the processor, while the code inside the processor is safe. However, crypto-processors are expensive and slow, and what's more troublesome in the general case is that normal users to not have - and can't be expected to have - such processors in their computers. As such, crypto processors cannot be counted on when protecting software code that is to be distributed without knowledge of the processor used.

A second technique is code obfuscation, that for example is described by Christian S. Collberg and Clark Thomborson in "Watermarking, Tamper-Proofing, and Obfuscation - Tools for Software Protection"; IEEE Transactions on Software Engineering 28:8, pp. 735-746, August 2002. The general idea is to increase the complexity of the assembly code in order to make reverse engineering more time consuming. Code obfuscation works well against static code analysis, but is weak against dynamic analysis. In essence, it just slows down the hackers' analysis. The protection is thus not very robust, and program performance decreases with obfuscation efficiency.

The third technique is code ciphering, used for example by systems such as ASProtect and Armadillo. The code, except for a loader that is needed for deciphering, is ciphered after the link at build time, and deciphered when it is loaded or executed. While this technique is strong against static analysis, it is vulnerable to other attacks. When the code is deciphered at load time, it is easy to use a tool such as UPX to dump the deciphered code during execution and then to copy the deciphered program to disk. This problem may in part be overcome by deciphering the code instruction by instruction during execution, as this makes it possible to erase the deciphered instruction just after its execution. The ciphered code can be deciphered to be executed at the original address defined at compilation time or somewhere else.

However, even this 'just-in-time' decryption is vulnerable to attacks if the address of deciphered code is known. In this case, hackers use so called hardware breakpoints to stop the execution of the program when the code appears in memory in its clear form. A hardware breakpoint is an address stored in a specific register; if the address stored in such register is accessed for reading, writing or execution the program execution stops.

Up until now, it has not been too difficult for hackers to find the address at which the code is executed, as a certain program is usually executed at the same address every time. This enables a hacker, once he has found this address, to use hardware breakpoints, to dump the code and analyse it dynamically.

A method to counter this detection is used for example by some viruses and also by 'normal' software. Virtual memory is dynamically allocated virtual memory at randomly chosen address and this is iterated until a free address is found. The code is then deciphered at this address and executed. The security of the method relies on the secret of the allocated address. However, hackers may "hook," i.e. spy on, the allocation function to find the randomly chosen address when it is allocated and then go to this address to dump the deciphered function.

It can therefore be appreciated that there is a need for a solution that overcomes at least some of the problems of the prior art and allows code protection that may be employed on a normal, i.e. non-crypto processor, and that is resistant to the use of hardware breakpoints. This invention provides such a solution.

### SUMMARY OF THE INVENTION

In a first aspect, the invention is directed to a method of executing a program comprising a ciphered function. An at least pseudo-random address in an allocated memory area is obtained, the ciphered function is deciphered at the obtained address, and the deciphered function is executed at the obtained address.

According to a first preferred embodiment, the memory area is first allocated.

According to a second preferred embodiment, before the obtention of the address, the memory area is filled with dummy code.

According to a third preferred embodiment, after execution the deciphered code is replaced with dummy code.

According to a fourth preferred embodiment, the at least pseudo-random address is expressed as an offset from the start of the memory area.

According to a fifth preferred embodiment, the program comprises a plurality of ciphered functions. A memory area is allocated for each ciphered function, and when a ciphered function it is to be executed, an address is obtained in the relevant memory area and the function is deciphered and executed at this address. It is advantageous that the obtention step, the deciphering step, the execution step, and the replacement step are iterated for a different ciphered function or a further execution of the ciphered function.

According to a sixth preferred embodiment, the program comprises a plurality of ciphered functions and the obtention step, the deciphering step, and the execution step are performed in parallel for the plurality of ciphered functions.

In a second aspect, the invention is directed to an apparatus for executing a program comprising a ciphered function. The apparatus comprises a memory management unit for allocating a memory area; a random generator for obtaining an at least pseudo-random address in the memory area; a decipher unit for deciphering the ciphered function at the obtained address; and a processor for executing the deciphered function at the obtained address.

According to a first preferred embodiment, the processor is further for filling the memory area with dummy code.

According to a second preferred embodiment, the processor is further for replacing the deciphered code with dummy code.

In a third aspect, the invention is directed to a computer program product comprising a computer program having at least an unciphered part and at least one ciphered function, wherein the unciphered part comprises instructions to, when executed by a processor: allocate a memory area; obtain an at least pseudo-random address in the memory area; decipher the ciphered function at the obtained address; and execute the deciphered function at the obtained address.

### BRIEF DESCRIPTION OF THE DRAWINGS

Preferred features of the present invention will now be described, by way of non-limiting example, with reference to the accompanying drawings, in which:
Figure 1 illustrates the main inventive idea for code protection according to the invention; and
Figure 2 illustrates code protection according to a preferred embodiment of the invention.

### PREFERRED EMBODIMENT OF THE INVENTION

The main inventive idea is to dynamically hide a deciphered function in a large memory space. This large memory space is allocated at the beginning of the program execution and is preferably filled with dummy code. Then, when an enciphered function is to be deciphered, it is deciphered at a randomly chosen address within the large memory space.

The randomization ensures that the location of the deciphered function is not predictable and reproducible, and therefore, makes protected code resistant to replay attacks. It should be noted that the large memory space does not need to be secret. It is preferred that the first address (i.e. the beginning) of the memory space does not correspond to a deciphered function address. It will thus be appreciated that even if the allocation function is hooked, this does not reveal any secret or useful knowledge.

As already explained, prior art solutions involve a processor (CPU) and a memory manager (MMU). If the MMU is not used for the deciphering of each function, then the deciphering address used by the CPU is always the same, which makes the code protection vulnerable to hardware breakpoint attacks. The other prior art solution is for the MMU to change deciphering address before each deciphering function, which enables a hacker to break the code protection by hooking the MMU interface.

The invention involves a third unit in the deciphering process, the deciphering management unit (DMU). The DMU prevents the use of hardware breakpoints by choosing a random deciphering address for the CPU and thus makes the hook of the MMU interface pointless.

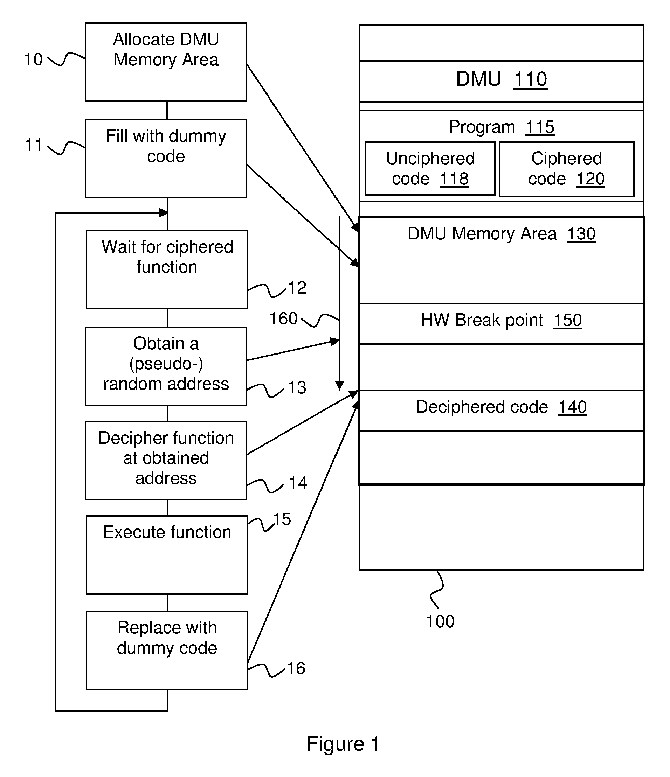

Figure 1 illustrates the main inventive idea of the invention. At the beginning of the program execution the DMU 110 allocates 10 a DMU Memory Area 130 in a virtual memory space 100 and fills it 11 with dummy code (not shown). The method then waits 12 for a ciphered function 120 to appear, i.e. for the moment when the function is to be executed. The DMU 110 is then called to obtain 13 a preferably pseudo-random address in the DMU Memory Area. This address is preferably obtained by using an offset 160 from the beginning of the DMU Memory Area 130, but may also be obtained as an address. The ciphered code 120 is then deciphered 14 at the obtained address in order to obtain deciphered code 140, which is then executed 15. After execution, the deciphered function is preferably replaced 16 with dummy code. Imagine that the DMU Memory Area is big, then, as can be seen, even if a hacker has set a hardware break point 150 in the DMU Memory Area, there is only a slight chance that this hardware break point 150 coincides with the deciphered code 140.

The computer program 115 thus comprises an unciphered part 118 with functions needed for initiation of the program execution and a ciphered part 120 comprising one or more ciphered functions. It should be noted that the program 115 is not necessarily stored as illustrated in Figure 1 that is for illustrative purposes only.

Thus the deciphering address becomes unpredictable to hackers. To analyze a ciphered function, hackers must find when and where the function will be deciphered. This increases the protection of the deciphered code and makes it resistant to replay attacks. As will be appreciated, it is very difficult to understand a program in one pass and usually when a hacker has found the address of a function he can easily execute it several times using hardware breakpoints. With this protection method, the needed effort to find the function address for a second pass is the same than for the first.

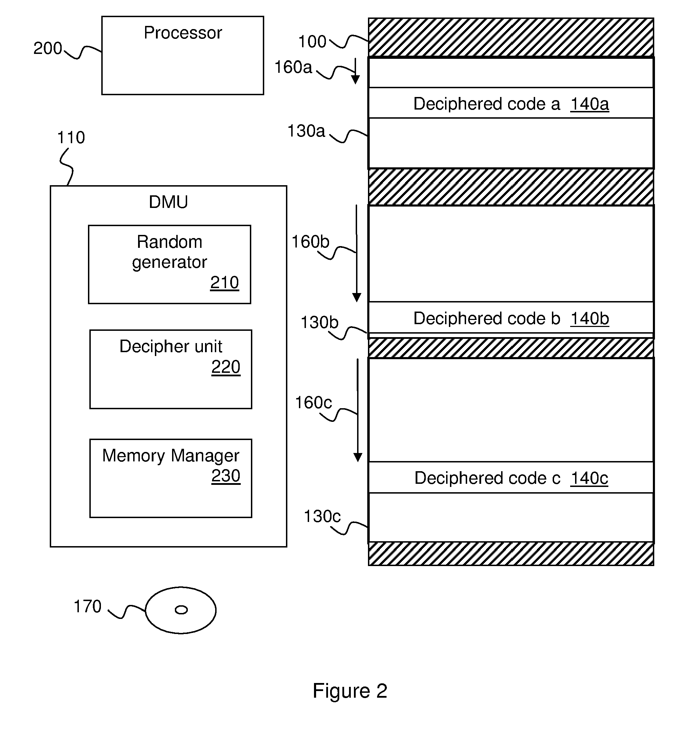

Figure 2 illustrates code protection according to a preferred embodiment of the invention. In the preferred embodiment, the code is ciphered, and subsequently deciphered, at the function level.

As described with reference to Figure 1, at the start of the program or at another opportune moment, the DMU 110 allocates the DMU Memory Area 130 in the virtual memory 100 and fills it with dummy code (not shown). In this way, the allocated memory is quite similar to other code sections. Moreover, hooking the vmallocate function, or similar, does not provide a hacker with very interesting or useful information.

The preferred embodiment also handles the cases in which the program is multi-threaded and in which a ciphered function calls another ciphered function. To do this, the allocated memory is divided in several memory chunks that are labelled as not used. In Figure 2, there are three memory chunks 130a, 130b, 130c, each for an enciphered function 140a, 140b, 140c.

Then, to execute a ciphered function, the DMU:
- Finds, in the DMU Memory Area, a memory chunk labelled as not used, and labels this memory chunk as used.
- Obtains a random shift 160a, 160b, 160c between one (1) and the size of the memory chunk 130a, 130b, 130c minus the size of the function, so that the function fits in the memory chunk, but does not start at the beginning of the memory chunk 130a, 130b, 130c.
- Deciphers the function at the address of the memory chunk 130a, 130b, 130c plus the random shift 160a, 160b, 160c.
- Executes the function at this address.
- Replaces the deciphered code by dummy code.
   The skilled person will appreciate that it is also possible to use a single memory chunk for a plurality of enciphered functions. In this case, it should be verified when the random address is obtained, that the function to be deciphered and executed at that address does not interfere with any other function in the memory chunk. In other words, a function should not be written over another function.

Figure 2 also illustrates that the DMU 110 comprises a unit 210 for obtaining one or more (pseudo-)random values, a unit 220 for deciphering enciphered code, and a Memory Manager Unit 230. The DMU 110 is preferably a logical unit that is executed by one or more processors 200 (hereinafter "processor").

In addition, Figure 2 also illustrates a computer program product 170, such as for example a CD-ROM, that stores at least parts of the program 115.

The code protection according to the preferred embodiment is particularly effective if a ciphered function calls another ciphered function and so on. If a hacker misses something in the third ciphered function, it will be necessary to execute the program step-by-step from the call to the first ciphered function up to the third ciphered function in order to go back to this point. This is really slow and frustrating; step-by-step execution being approximately 100 000 000 times slower than normal execution.

It will be appreciated that it is advantageous to hide the start point of the ciphered function. If the attacker uses four hardware break points within one memory chunk of size |MC|, the probability to find the start point of a function of size |f| is roughly 4/(|MC|-|f|). The probability naturally decreases as the size and/or the number of memory chunks increases.

It should be noted, however, that the present invention is not ideal for recursive functions or functions that call themselves a small number of times.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method of executing a program comprising a ciphered function (120), the method comprising, at a processor (200) executing the program, the steps of:
- obtaining (13) an at least pseudo-random address in an allocated memory area (130);
- deciphering (14) the ciphered function at the obtained address; and
- executing (15) the deciphered function at the obtained address.

2. The method of claim 1, further comprising the preceding step of allocating (10) the memory area (130).

3. The method of claim 1, further comprising the step, before the obtention step (13), of filling (11) the memory area (130) with dummy code.

4. The method of claim 1, further comprising, after the execution step (15), the step of replacing (16) the deciphered code with dummy code.

5. The method of claim 4, wherein the obtention step (13), the deciphering step (14), the execution step (15), and the replacement step (16) are iterated for a different ciphered function or a further execution of the ciphered function.

6. The method of claim 1, wherein the at least pseudo-random address is expressed as an offset from the start of the memory area (130).

7. The method of claim 1, wherein the program comprises a plurality of ciphered functions (120), where in the allocating step (10) comprises allocating a memory area (130a, 130b, 130c) for each of the plurality of ciphered functions (120), and wherein the obtention step (13), the deciphering step (14) and the execution step (15) are performed for a ciphered function when it is to be executed.

8. The method of claim 1, wherein the program comprises a plurality of ciphered functions and wherein the obtention step (13), the deciphering step (14), and the execution step (15) are performed in parallel for the plurality of ciphered functions.

9. An apparatus for executing a program comprising a ciphered function (120), the apparatus comprising:
- a memory management (230) unit for allocating a memory area (130);
- a random generator (210) for obtaining an at least pseudo-random address in the memory area (130);
- a decipher unit (220) for deciphering the ciphered function at the obtained address; and
- a processor (200) for executing the deciphered function at the obtained address.

10. The apparatus of claim 9, wherein the processor (200) is further for filling the memory area (130) with dummy code.

11. The apparatus of claim 9, wherein the processor (200) is further for replacing the deciphered code with dummy code.

12. A computer program product (170) comprising a computer program (115) having at least an unciphered part (118) and at least one ciphered function (120), wherein the unciphered part comprises instructions to, when executed by a processor:
- allocate a memory area (130);
- obtain an at least pseudo-random address in the memory area (130);
- decipher the ciphered function at the obtained address; and
- execute the deciphered function at the obtained address.
